# EUROPÄISCHE PATENTSCHRIFT

(11) **EP 1 134 551 B1**
(45) Veröffentlichungstag und Bekanntmachung des Hinweises auf die Patenterteilung: **14.12.2011**
(21) Anmeldenummer: 01102958.4
(22) Anmeldetag: 08.02.2001
(51) Int. Cl.: G01C 21/36, G08G 1/0969

(54) **Navigationsgerät**
Navigation system
Système de navigation

(30) Priorität: 10.02.2000 DE 10005878
(43) Veröffentlichungstag der Anmeldung: 19.09.2001
(73) Patentinhaber: XSYS Interactive Research GmbH, 78050 Villingen-Schwenningen (DE)
(72) Erfinder: Cochlovius, Elmar, Dr., 78052 Villingen-Schwenningen (DE); Wagner, Thomas, 31139 Hildesheim (DE); Wagner, Oliver, 31134 Hildesheim (DE)
(74) Vertreter: Patentanwälte Westphal, Mussgnug & Partner

(56) Entgegenhaltungen:
- EP-A- 0 836 167
- US-A- 5 721 684

## Beschreibung

Die Erfindung betrifft ein Navigationsgerät insbesondere für Fahrzeuge gemäß dem Oberbegriff des Anspruchs 1.

Die bekannten Navigationsgeräte, von denen die Erfindung ausgeht, sind aus dem Stand der Technik in einer Vielzahl von Abwandlungen bekannt.

Die Hauptbestandteile eines solchen Navigationsgeräts oder Fahrzeugnavigationssystems sind eine Bedieneinheit zur Start-, Zwischenziel- und/oder Zieleingabe; ein Datenträger für Navigationsdaten, wie z. B. für Informationen zur Darstellung von Straßenkarten; ein Navigationsrechner zur Durchführung der Routenplanung und Zielführung; eine Datenaufbereitungseinheit zur Aufbereitung von Daten in Bildinformationen, wobei die Datenaufbereitungseinheit in der Regel ein Bildspeicher zum Speichern der Bildinformationen enthält und einen Bildschirm bzw. eine Anzeigeeinheit zur Darstellung von Straßenkarten, Positionsinformationen, Zielinformationen usw. Häufig weisen solche Navigationsgeräte auch eine Reihe von Sensoren zur Bestimmung der Fahrzeugposition, der Geschwindigkeit der Orientierung usw. auf.

So ist beispielsweise aus der US 5,689,252 ein Navigationsgerät bekannt, welches als Zentraleinheit einen Mikrocontroller aufweist. An diesen Mikrocontroller sind eine Dateneingabe, ein GPS-(= Global Positioning-System) Signalempfänger, ein Richtungssensor, ein Entfernungssensor und ein Verkehrsinformationsempfänger angeschlossen. Weiterhin ist ein Datenspeicher angeschlossen, auf dem Informationen über das Straßennetz, insbesondere Straßenkarten, gespeichert sind. Die von diesen Komponenten dem Mikrocontroller zugeführten Daten werden einem Navigationsrechner zur Durchführung der Routenplanung zur Verfügung gestellt. Die so errechneten Daten werden dann auf einem ebenfalls an den Mikrocontroller angeschlossenen Bildschirm angezeigt.

Dabei ist zu beachten, dass insbesondere Strassenkarteninformationen nicht direkt angezeigt werden können, sondern zunächst durch eine geeignete Transformation in Bildinformationen umgewandelt werden müssen.

Neuere Systeme geben dem Benutzer die Möglichkeit, den anzuzeigenden Bildausschnitt durch Zoom- oder Scroll-Funktionen frei zu wählen. Weiterhin wird bei solchen Systemen häufig die Richtung und die Bewegung des Fahrzeugs in den auf dem Bildschirm dargestellten Strassenkarten angezeigt. Durch diese sogenannten Benutzeranforderungen (Zoom- oder Scroll-Funktionen) und Systemanforderungen (Fahrzeugbewegung) ändert sich die darzustellende Bildinformation ständig und muss aus geeigneten Strassenkarteninformationen ständig aktualisiert werden.

Die oben angegebene Anordnung herkömmlicher Navigationsgeräte oder Fahrzeugnavigationssysteme erlaubt es, die Strassenkarteninformationen für jede Bilddarstellung einzeln von dem Navigationsrechner abzurufen und in einen Bildspeicher zwischenzuspeichern.

Die US 5,721,684 beschreibt ein Navigationssystem mit einem Hauptprozessor und einem Grafikprozessor, wobei der Grafikprozessor für das Darstellen einer Karte verantwortlich ist, während der Hauptprozessor andere Aufgaben übernimmt.

In der EP 0 306 088 A1 ist ein Navigationsgerät neuerer Generation beschrieben. Bei diesem Navigationsgerät sind die Einzelkomponenten über einen Datenbus miteinander verbunden. Eine solche Vernetzung ist bei sogenannten vernetzten Fahrerinformationssystemen üblich. Der Vorteil solcher vernetzter Fahrerinformationssysteme liegt darin, dass eine nahezu beliebige Anzahl von Einzelkomponenten über eine Datenbusleitung miteinander verknüpft werden können. So kann beispielsweise der Bildschirm nicht nur zur Anzeige von Navigationsdaten, Strassenkarten etc. verwendet werden, sondern dient beispielsweise auch zur Anzeige eines Defekts oder ähnlichem im Fahrzeug.

Das in der EP 0 306 088 A1 beschriebene Navigationsgerät basiert auf einem Datenbus, einem an den Datenbus angeschlossenen Datenspeicher, auf dem eine Vielzahl von Straßenkarten und Navigationsdaten gespeichert sind; einem an den Datenbus angeschlossenen Navigationsrechner zur Routenplanung; einer an den Datenbus angeschlossenen Datenaufbereitungseinheit zur Aufbereitung von Daten in Bildinformationen, wobei die Datenaufbereitungseinheit einen Bildspeicher zum Speichern der Bildinformationen enthält; einem an die Datenaufbereitungseinheit angeschlossenen Bildschirm, auf dem die Bildinformationen darstellbar sind und einem Kommunikationsblock mit einer Bedieneinheit zur Start-, Zwischenziel und/oder Fahrtzieleingabe.

Bei einem solchen System wird jede Bildinformation einer Straßenkarte einzeln in den Bildspeicher geladen. Die Übertragung einer solchen Bildinformation erfolgt stets über die Busleitung. Will nun ein Benutzer beispielsweise die aktuelle Bildschirmdarstellung verändern oder führt die Bewegung des Fahrzeugs dazu, dass sich die Bildinformation ständig ändert, so ist ständig eine Übertragung der Straßenkarteninformation aus dem Datenspeicher in den Bildspeicher notwendig. Für eine Bildschirmdarstellung mit hinreichenden Bildrefreshzyklen wird eine große Bandbreite des Datenbusses notwendig, welche in der Regel nicht vorhanden ist. Des Weiteren wird der Datenbus nahezu ausschließlich für den Bildinformationstransfer benötigt, so dass andere Informationen bzw. Daten nicht oder nur sequentiell in den verbleibenden Zwischenzeiten übertragbar sind.

Zur Verdeutlichung werden die o.a. Einschränkungen anhand zweier Beispiele erläutert:

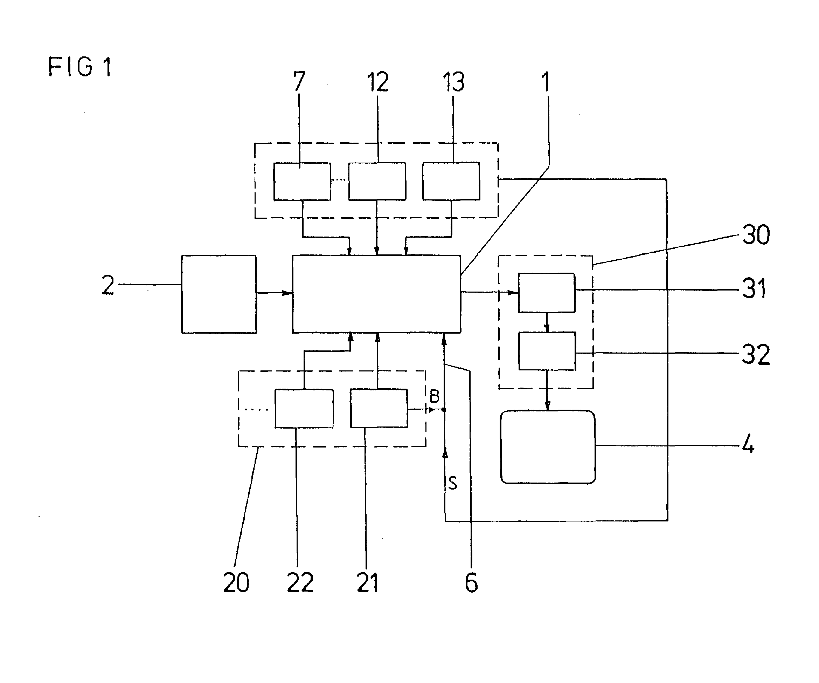

Bei einem wie in Figur 1 dargestellten Navigationsgerät der ersten Generation ist die zentrale Einheit ein Navigationsrechner 1. Diesem Navigationsrechner 1 werden von außen Informationen zugeführt. In dem Beispiel erhält der Navigationsrechner diese Informationen von einem Sensorblock 10, einem Datenspeicher 2 und einem Kommunikationsblock 20.

In dem Sensorblock 10 sind im Beispiel ein Richtungssensor 12 und ein Positionssensor 13 enthalten. Der Datenspeicher 2 speichert Informationen über Straßennetze. Dazu gehören insbesondere Informationen zur Darstellung von Straßenkarten, Informationen über die Verkehrsführung, Informationen über Geschwindigkeitsbegrenzungen auf den Straßen und andere Navigationsdaten. Dieser Datenspeicher 2 ist in der Regel als CD-ROM ausgeführt, jegliches andere Speichermedium ist aber ebenfalls denkbar. Während auf dem Datenspeicher 2 solche Daten abgespeichert sind, welche einer Aktualisierung in größeren Zeitabständen bedürfen, ist in dem Beispiel der Kommunikationsblock 20 dafür vorgesehen, dem Navigationsrechner 1 sich ständig ändernde Informationen über Navigationsdaten zuzuführen. So enthält dieser Kommunikationsblock 20 eine Bedieneinheit 21 zur Zieleingabe und Funktionseinstellung des Bildschirms, insbesondere zur Auswahl eines Straßenkartenabschnitts (Zoom und/oder Scroll-Funktionen). Des Weiteren ist diesem Kommunikationsblock 20 im Beispiel auch ein Verkehrsdatenempfänger 22 zugeordnet, der beispielsweise von verschiedenen Radiostationen aktuelle Verkehrsinformationen empfangen und entsprechend aufbereiten kann.

Die von diesen Einzelkomponenten 10, 2 und 20 dem Navigationsrechner 1 zugeführten bzw. zuführbaren Daten werden von diesem Navigationsrechner 1 zur Durchführung einer Routenplanung und zur Zielführung verwendet. Eine so berechnete Straßenkartendarstellung soll dann einem Bildschirm 4 zugeführt werden. Solche von dem Navigationsrechner 1 erzeugten Straßenkarteninformationen können allerdings nicht direkt angezeigt werden, sondern müssen durch eine geeignete Transformation in Bildinformationen umgewandelt werden.

In heutigen Navigationssystemen oder Navigationsgeräten ist der Navigationsrechner 1 üblicherweise direkt einer dafür vorgesehenen Datenaufbereitungseinheit 30 zugeordnet.

In dem in Figur 1 dargestellten Beispiel ist die in der Datenaufbereitungseinheit 30 vorzunehmende Transformation von Straßenkarteninformationen in Bildinformationen mit Hilfe einer dafür vorgesehenen Transformationseinheit 31 möglich. Die mit Hilfe der Transformationseinheit 31 in Bildinformationen umgewandelten Straßenkarteninformationen werden dann in dem Bildspeicher 32 zwischengespeichert und danach auf dem Bildschirm 4 angezeigt.

Die von dem Sensorblock 10 bereitgestellten Daten werden nicht allein vom Navigationsrechner 1 zur Durchführung der Routenplanung und Zielführung benötigt, sondern die Bewegungen des Fahrzeugs sollen bei solchen Fahrzeugnavigationssystemen bzw. Navigationsgeräten auf dem Bildschirm 4 dargestellt werden. Des Weiteren ist es bei Navigationsgeräten üblich, dass der Benutzer beispielsweise den zu betrachtenden Straßenkartenausschnitt selbst wählen kann. Hierzu hat der Benutzer beispielsweise die Möglichkeit Zoom- und/oder Scroll-Funktionen auszuführen. Solche Anforderungen des Benutzers werden in der Bezeichnung mit dem Bezugszeichen B gekennzeichnet. Anforderungen, welche vom Fahrzeug direkt übermittelt werden und aufgrund derer sich die darzustellende Bildinformation ändert wird im Beispiel als Systemanforderung S bezeichnet. Vorzugsweise wird eine solche Systemanforderung S aufgrund den von dem Sensorblock 10 zur Verfügung gestellten Daten vorgenommen. Zur Verdeutlichung werden diese Systemanforderungen S bzw. Benutzeranforderungen B in der Zeichnung auf der Anforderungsleitung 6 dem Navigationsrechner 1 zugeführt.

In dieser in der Figur 1 dargestellten Anordnung der ersten Generation eines Fahrzeugnavigationssystems bzw. eines Navigationsgeräts kann auf eine umfangreiche Speicherung von Straßenkarteninformationen in der Datenaufbereitungseinheit 30 verzichtet werden. Die Speicherung der Bildinformation im Bildspeicher 32 ist ausreichend, da die Straßenkarteninformation für jedes Bild einzeln von dem Navigationsrechner 1 der Datenaufbereitungseinheit bereitgestellt werden kann, indem er ggf. auf den Datenspeicher 2 zugreift.

Die Datenaufbereitungseinheit 30 ist nicht in der Lage, Benutzeranforderungen B und/oder Systemanforderungen S zu verarbeiten und neue Bildinformationen daraus zu generieren.

In einer zweiten Generation von Navigationssystemen ist das Navigationsgerät selbst in einem komplexen Fahrerinformationssystem integriert. Ein solches Fahrerinformationssystem ist dazu vorgesehen, dem Fahrer aktuelle Daten zu übermitteln, beispielsweise über den Zustand des Fahrzeugs, Fehlfunktionen etc. Die Einzelkomponenten eines solchen Fahrerinformationssystems sind beispielsweise Sensoren, Eingabegeräte, Radioempfänger, Verstärker, Lautsprecher, Anzeigegeräte, Bildschirme etc. Sie sind über einen gemeinsamen, standardisierten Bus miteinander vernetzt.

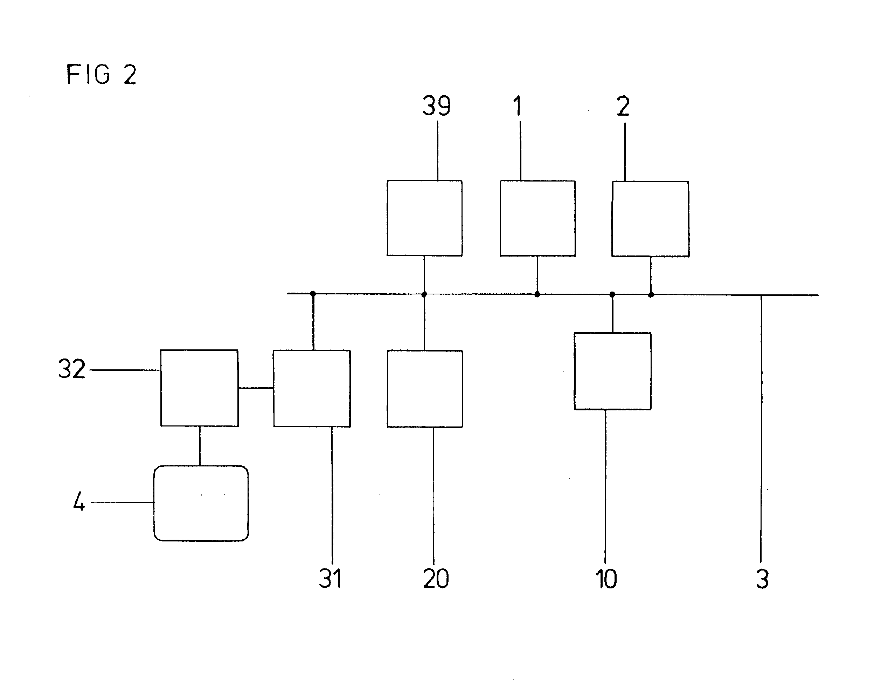

Die Figur 2 zeigt wie die Einzelkomponenten eines solchen Navigationsgeräts in ein solches Fahrerinformationssystem integriert ist. Der Figur 2 ist insbesondere zu entnehmen, wie ein solches Navigationsgerät gemäß der EP 0 306 088 mit den aus der Figur 1 bekannten Einzelkomponenten mit einer Busstruktur zu realisieren ist.

An einen Datenbus 3 sind ein Navigationsrechner 1, ein Datenspeicher 2, eine Kontrolleinheit 39 und ein Sensorblock 10 angeschlossen. Ebenso schließt sich ein Kommunikationsblock 20 sowie eine Transformationseinheit 31 an. Die Transformationseinheit 31 ist mit einem Bildspeicher 32 verbunden und dieser Bildspeicher 32 wiederum mit einem Bildschirm 4.

Die Komponenten 20 und 31 sind als Standardmodule ausgeführt und sind folglich außer von dem Navigationssystem bzw. Navigationsgerät selbst auch von anderen daran anschließenden Geräten ansteuerbar. Die Trennung von Navigationsrechner 1' und Bildschirm 4, welcher über das Transformationseinheit 31 und den Bildspeicher 32 an den Datenbus 3 angeschlossen ist, führt dazu, dass aufgrund der begrenzten Bandbreite der Datenbusleitung 3 und des Übertragungsbedarfs zwischen anderen an den Datenbus 3 angeschlossenen Komponenten die Bilddarstellung auf dem Bildschirm 4 nur in relativ langen Zeitabständen erneuerbar ist. Systemanforderungen S und/oder Benutzeranforderungen B gemäß Figur 1 sind also in der Regel gar nicht bearbeitbar oder eine ruckelfreie Bildschirmdarstellung ist nicht gewährleistet.

Die Aufgabe der Erfindung besteht nun darin, ein Navigationsgerät vorzustellen, welches sich für vernetzte Fahrerinformationssysteme eignet und bei dem Straßenkarteninformationen vom Navigationsrechner zur Datenaufbereitungseinheit und damit zum Bildschirm so übertragbar sind, dass bei einer limitierten Bandbreite des Datenbusses noch eine ausreichende Bildwiederholrate möglich ist.

Diese Aufgabe wird erfindungsgemäß gelöst durch ein Navigationsgerät mit den kennzeichnenden Merkmalen des Anspruchs 1.

Vorteilhafte Ausführungen und Weiterbildungen der Erfindung sind in den Unteransprüchen angegeben.

Der wesentliche Gedanke der Erfindung besteht nun darin, dass die Datenaufbereitungseinheit selbst einen Straßenkartenspeicher zum Speichern von Straßenkarteninformationen aufweist. Dieser Straßenkartenspeicher dient dazu bereits vom Navigationsrechner übertragene Informationen zwischenzuspeichern. Diese lokal in der Datenaufbereitungseinheit verfügbaren Informationen stehen bei Bedarf zur Bildschirmdarstellung bereit, ohne dass eine Kommunikation mit dem Navigationsrechner erforderlich ist. Dies bedeutet, dass die Information in der Datenaufbereitungseinheit nicht nur einmal sondern mehrmals genutzt wird, was zu einer Reduzierung der Buslast führt. Erst wenn Bildinformationen darzustellen sind, welche nur in dem an dem Datenbus angeschlossenen Datenspeicher vorhanden sind, ist ein Zugriff auf den Navigationsrechner und damit den Datenbus notwendig, die dieser mit der Übertragung der benötigten Information beantwortet. Diese neu übertragene Information verdrängt gegebenenfalls die veraltete und nicht mehr benötigte Information aus dem Straßenkartenspeicher der Datenaufbereitungseinheit. Ein direkter Zugriff der Datenaufbereitungseinheit auf den Datenspeicher ist aufgrund der Softwaremodularisierung im Navigationsrechner ungünstig.

Allgemein wird aber durch eine Modularisierung eine Erweiterbarkeit oder Austauschbarkeit einzelner Komponenten erleichtert, weshalb auf eine solche Modularisierung nicht verzichtet wird. Ein diesbezügliches Höchstmaß an Flexibilität wird erfindungsgemäß dadurch erreicht, dass der Navigationsrechner und die Datenaufbereitungseinheit als Module ausgebildet sind, die mit zwei separaten Mikroprozessoren realisiert sind.

Da die Fahrzeugbewegung üblicherweise kontinuierlich erfolgt, läßt sich durch ein geeignetes Datenmanagement in der Datenaufbereitungseinheit bereits frühzeitig erkennen, welche Straßenkarteninformationen nachfolgend aufgrund der Fahrzeugbewegung benötigt werden wird. Diese können bereits vorausschauend vom Navigationsrechner angefordert werden (Look-Ahead-Prinzip), so dass zu ihrer Übertragung mehr Zeit zur Verfügung steht. Dies führt zu einer weiteren Verringerung des Bandbreitenbedarfs des Datenbusses und damit zu einer entsprechenden Entlastung des Netzwerks.

In einer besonders vorteilhaften Ausführung der Erfindung ist der Datenbus als "Media Oriented Synchronous Transfer"-(MOST) oder als "Multi Media Link" - (MML) Bus ausgeführt. Solche standardisierten Bussysteme garantieren in Kombination mit dem o. a. modularen Aufbau eine einfache Integrierbarkeit des erfindungsgemäßen Navigationssystems in fast alle gängigen Fahrzeugfabrikate.

In einer vorteilhaften Ausführung der Erfindung ist vorgesehen, dass der Kommunikationsblock eine Bedieneinheit zur Eingabe einer Benutzeranforderung zur Änderung der aktuellen Bildinformation aufweist und ein Verkehrsdatenempfänger zum Empfangen aktueller Verkehrsinformationen. Dabei ist unerheblich, ob diese Informationen direkt dem Navigationsrechner zugeführt werden oder über den Datenbus. Die Bedieneinheit zur Eingabe der Benutzeranforderung kann beispielsweise auch der Datenaufbereitungseinheit zugeordnet sein, wenn eine Eingabe beispielsweise über einen Touch-Screen erfolgt.

Weiterhin sieht die Erfindung vor, dass dem Navigationsrechner ein Sensorblock zu einer Positionsdatenerfassung zugeordnet ist. Zur Positionsdatenerfassung ist beispielsweise ein Positionssensor zur Erfassung einer momentanen Ist-Position vorgesehen und/oder ein Richtungssensor zur Erfassung einer momentanen Orientierung des Fahrzeugs, sowie ein Geschwindigkeitssensor und/oder ein Drehratensensor.

Es ist vorgesehen, dass die von dem Sensorblock erfaßten Positionsdaten eine Systemanforderung zur Änderung einer aktuellen Bildinformation enthält. Die in der Bedieneinheit eingegebene Benutzeranforderung und/oder die beispielsweise vom Sensorblock zur Verfügung gestellte Systemanforderung werden der Datenaufbereitungseinheit zugeführt, welche eine Straßenkarte aus dem Kartenspeicher geeignet in Bildinformation transformiert oder vom Navigationsrechner weitere Karteninformationen anfordert.

Ein Ausführungsbeispiel der Erfindung ist in der Zeichnung dargestellt und wird unten näher beschrieben. Es zeigen:
- Figur 1: eine Anordnung eines Navigationsgerätes der er- sten Generation ohne Datenbus gemäß dem Stand der Technik,
- Figur 2: ein Navigationsgerät der zweiten Generation mit einem Datenbus nach dem Stand der Technik,
- Figur 3: ein Ausführungsbeispiel eines erfindungsgemäßen Navigationsgeräts,
- Figur 4: ein Flußdiagramm zur Demonstration einer Ver- waltung und Verarbeitung der in dem Karten speicher der Datenaufbereitungseinheit gespei- cherten Straßenkarten.

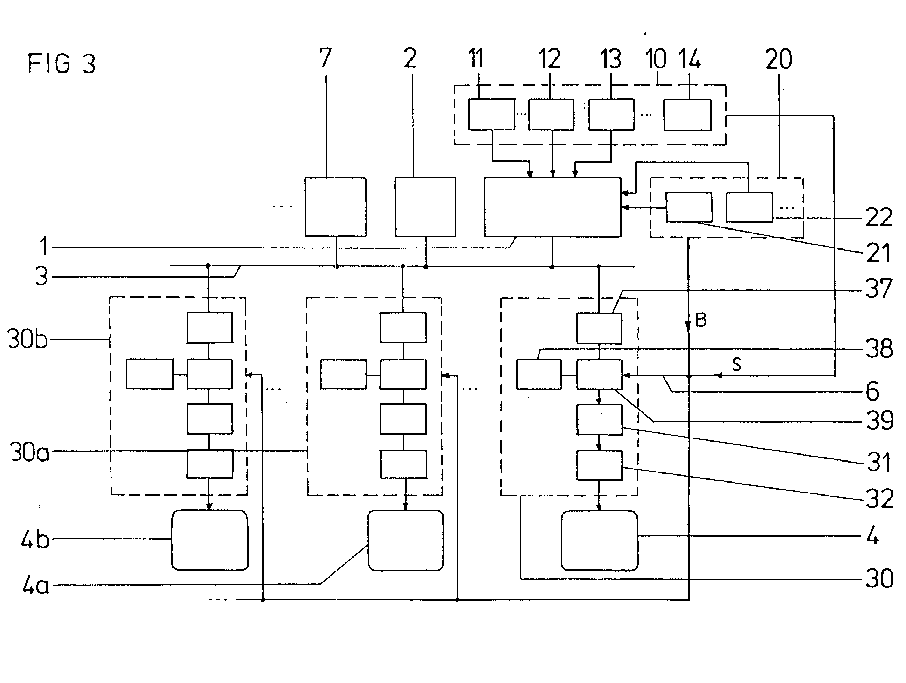

In der Figur 3 ist nun beispielhaft dargestellt, wie ein Navigationsgerät in einer Datenbusstruktur gemäß der Erfindung realisiert ist. An einen Datenbus 3 schließen sich ein Navigationsrechner 1, ein Datenspeicher 2 und eine Datenaufbereitungseinheit 30 an. Im Beispiel sind weitere Komponenten, welche sich an den Datenbus 3 anschließen, durch ein einziges Blocksymbol mit dem Bezugszeichen 7 gekennzeichnet.

Wie in dem Navigationsgerät der ersten Generation gemäß Figur 1 werden dem Navigationsrechner 1 Daten zugeführt. Auch hier sind beispielhaft ein Geschwindigkeitssensor 11, ein Richtungssensor 12, ein Positionssensor 13 und ein Drehratensensor 14 skizziert. Weiterhin werden dem Navigationsrechner 1 in analoger Weise von dem Kommunikationsblock 20, insbesondere der Bedieneinheit 21 und dem Verkehrsdatenempfänger 22 Informationen zugeführt. Selbstverständlich können diese Informationen des Kommunikationsblockes 20 und des Sensorblocks 10 auch über den Datenbus 3 übertragen werden.

Anders als bei dem Navigationsgerät der ersten Generation gemäß Figur 1 werden Benutzeranforderungen B und Systemanforderungen S, welche im Beispiel von der Bedieneinheit 21 bzw. dem Sensorblock 10 übertragen werden, nicht dem Navigationsrechner 1 zugeführt, sondern über die Anforderungsleitung 6 der Datenaufbereitungseinheit 30.

Während also in traditionellen Navigationssystemen neue Anfoderungen S und B vom Navigationsrechner 1 bearbeitet werden, ist erfindungsgemäß vorgesehen, dass eine neue Anforderung S/B weitgehend lokal in der Datenaufbereitungseinheit 30 bearbeitet wird. Die Erfindung sieht daher vor, dass den Standardeinheiten Bildschirm 4, Bildspeicher 32 und Transformationseinheit 31 eine Kontrolleinheit 39 vorgeordnet ist, welcher die Benutzeranforderungen B und Systemanforderungen S über die Anforderungsleitung 6 zugeführt werden. An diese Kontrolleinheit 39 schließt sich einerseits ein Kartenspeicher 38 an, welcher geeignet ist, eine größere Menge von aus dem Datenspeicher 2 via den Datenbus 3 dem Navigationsrechner 1 zugeführten Straßenkarteninformationen zu speichern. Die Kontrolleinheit 39 selbst ist zu diesem Zweck mittels eines Netzwerkadapters 37 an den Datenbus 3 angeschlossen.

Eine Ausführungsvariante besteht darin, dass der Datenspeicher 2 nicht am Datenbus 3 sondern am Navigationsrechner 1 hängt.

Die Datenaufbereitungseinheit 30 ist erfindungsgemäß so ausgelegt, dass Benutzeranforderungen B den Systemanforderungen S unabhängig vom Navigationsrechner 1, d. h. lokal verarbeitet werden können und dass nur bei Bedarf neue Karteninformationen aktiv vom Navigationsrechner 1 nach dem Client-Server-Prinzip angefordert werden. Der neben dem Bildspeicher 32 in der Datenaufbereitungseinheit 30 angeordnete Kartenspeicher 38 ist dazu in der Lage, vom Navigationsrechner 1 übertragene Karteninformationen zwischenzuspeichern.

Unter der Annahme, dass Benutzeranforderungen B und Systemanforderungen S sich weitestgehend mit lokal verfügbaren Karteninformationen im Kartenspeicher 38 verarbeiten lassen (Cache-Prinzip), kann der aktuelle Bildschirminhalt ohne Kommunikation mit dem Navigationsrechner 1 aus dem Kartenspeicher 38 errechnet werden. Dies bedeutet, dass die Karteninformation in der Datenaufbereitungseinheit 30 nicht nur einmal, sondern mehrmals benutzt wird, was zu einer Reduzierung der Buslast führt. Aufgrund reduzierter Anfragen der Datenaufbereitungseinheit 30 ist der Navigationsrechner 1 in der Lage, mehrere Datenaufbereitungseinheiten 30, 30a, 30b mit Daten zu versorgen. Dies erlaubt es, auf mehreren unabhängigen Bildschirmen 4, 4a, 4b verschiedene Kartenausschnitte darzustellen, z. B. die aktuelle Umgebung und die Zielumgebung.

Erst wenn Benutzer - oder Systemanforderungen B, S einen Zugriff auf Karteninformationen erfordern, die nicht im Kartenspeicher 38 der Datenaufbereitungseinheit 30 verfügbar sind, ist eine Anforderung von Karteninformationen an dem Navigationsrechner 1 notwendig, die dieser mit der Übertragung der benötigten Karteninformation beantwortet. Neu übertragene Karteninformationen verdrängen gegebenenfalls veraltete nicht mehr benötigte Karteninformationen aus dem Kartenspeicher 38 der Datenaufbereitungseinheit 30.

Da die Fahrzeugbewegung üblicherweise kontinuierlich erfolgt, läßt sich durch geeignete Rechenoperationen bzw. Kontrolloperationen der Kontrolleinheit 39 bereits frühzeitig erkennen, welche Karteninformationen nachfolgend aufgrund von Systemanforderungen S benötigt werden. Solche Karteninformationen können also bereits vorausschauend vom Navigationsrechner 1 angefordert und dem Kartenspeicher 38 zugeführt werden. Dadurch steht für diese Übertragung mehr Zeit zur Verfügung. Dies führt zu einer weiteren Verringerung des Bandbreitenbedarfs des Datenbusses 3 und zu einer entsprechenden Entlastung des gesamten Netzwerkes.

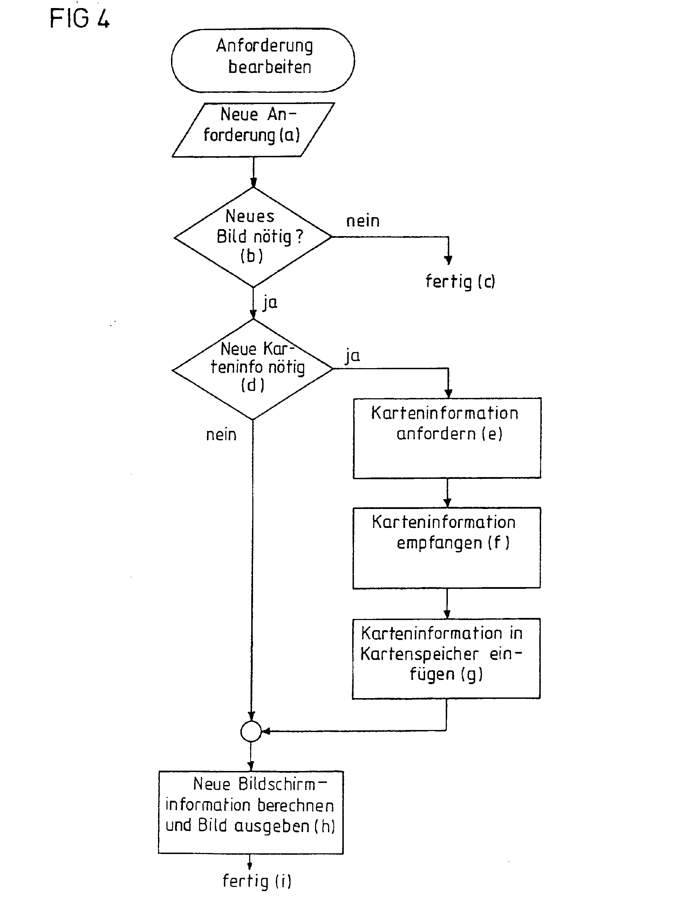

Wie eine solche Anforderung neuer Karteninformation von der Datenaufbereitungseinheit 30 beim Navigationsrechner 1 angefordert werden kann, ist dem in Figur 4 dargestellten Fluss-Diagramm zu entnehmen.

Beim Auftreten einer (a) neuen Anforderung (Benutzeranforderung B und/oder Systemanforderung S) erfolgt zunächst eine Prüfung, ob überhaupt ein neues Bild benötigt wird (b). Weicht zum Beispiel die neue Fahrzeugposition und/oder -orientierung nur unwesentlich von der aktuellen ab, so ist es bei großem Darstellungsmaßstab gegebenenfalls unnötig, ein neues Bild zu berechnen, da die Unterschiede zum aktuellen im Rahmen der gegebenen Auflösung sowieso nicht sichtbar wären. In diesem Fall ist die Bearbeitung der neuen Anforderung beendet (c) .

Sind die Abweichungen hinreichend groß, um ein neues Bild zu erfordern, muß die Kontrolleinheit 39 als nächstes prüfen, ob die zur Berechnung der neuen Bildinformation benötigten Karteninformationen im Kartenspeicher 38 vorliegen (d). Diese Situation kann z. B. aufgrund früherer Anforderungen B, S auftreten. Ist dies der Fall, so kann die neue Bildinformation sofort berechnet, in Bildspeicher 32 abgelegt und auf dem Bildschirm 4 oder Display angezeigt werden (i). In diesem Fall ist die Bearbeitung der neuen Anforderungen B, S beendet (c).

Müssen die neuen Karteninformationen erst geladen werden, so erfolgt eine Anforderung der benötigten Karteninformation (e) über den Datenbus 3 beim Navigationsrechner 1. Dieser schickt die angeforderten Karteninformationen über den Datenbus 3 an die Datenaufbereitungseinheit 30. Da die Karteninformationen üblicherweise in ganzen Seiten verfügbar sind, werden auch ganze Seiten übertragen.

In der Datenaufbereitungseinheit 30 werden die Karteninformationen vom Netzwerkadapter 37 empfangen (f) und von der Kontrolleinheit 39 in den Kartenspeicher 38 für spätere Zugriffe eingefügt (g). Die aufgrund der Seitenpartitionierung zunächst zuviel übertragenen Karteninformationen stehen dann bei weiteren kontinuierlichen Systemanforderungen S sofort zur Verfügung (Look-Ahead-Prinzip).

Jetzt sind alle Karteninformationen, die aufgrund der Anforderung B, S (a) benötigt werden, im Kartenspeicher 28 vorhanden. Die neue Bildinformation kann daraufhin in der Transformationseinheit 31 berechnet, im Bildspeicher 32 abgelegt und auf dem Bildschirm 4 ausgegeben werden (h).

Damit ist die Bearbeitung der Anforderung beendet (i).

### Bezugszeichenliste

- 1: Navigationsrechner
- 2: Datenspeicher
- 3: erster Datenbus
- 4, 4a, 4b: Bildschirm
- 6: Anforderungsleitung
- 7: weitere Komponente
- 10: Sensorblock
- 11: Geschwindigkeitssensor
- 12: Richtungssensor
- 13: Positionssensor
- 14: Drehratensensor
- 20: Kommunikationsblock
- 21: Bedieneinheit
- 22: Verkehrsdatenempfänger
- 30, 30a, 30b: Datenaufbereitungseinheit
- 31: Transformationseinheit
- 32: Bildspeicher
- 37: Netzwerkadapter
- 38: Kartenspeicher
- 39: Kontrolleinheit
- B: Benutzeranforderung
- S: Systemanforderung

## Patentansprüche

1. Navigationsgerät, insbesondere für Fahrzeuge,
(a) mit einem Datenbus (3),
(b) mit einem Datenspeicher (2) auf dem eine Vielzahl von Straßenkarteninformationen und Navigationsdaten gespeichert sind,
(c) mit einem an den Datenbus (3) angeschlossenen Navigationsrechner (1) zur Routenplanung, ein Sensorblock (10) zu einer Positionsdatenerfassung zugeordnet ist,
(d) mit einer an den Datenbus (3) angeschlossenen Datenaufbereitungseinheit (30) zur Aufbereitung von Daten in Bildinformationen, wobei die Datenaufbereitungseinheit (30) einen Bildspeicher (32) zum Speichern der Bildinformationen enthält, und wobei die Datenaufbereitungseinheit (30) einen Kartenspeicher (38) zum Speichern von Straßenkarteninformationen aufweist,
(e) mit einem an die Datenaufbereitungseinheit (30) angeschlossenen Bildschirm (4), auf dem die Bildinformationen darstellbar sind,
(f) mit einem Kommunikationsblock (20) mit einer Bedieneinheit (21) zur Start-, Zwischenziel- und/oder Zieleingabe einer Fahrt,
**dadurch gekennzeichnet, dass** die vom Sensorblock (10) erfassten Positionsdaten eine Systemanforderung (S) über eine Anforderungsleitung (6) der Datenaufbereitungseinheit (30) Zuführen und in der Datenaufbereitungseinheit (30) bewirken, die zur Änderung einer aktuellen Bildinformation führt.

2. Navigationsgerät nach Anspruch 1,
**dadurch gekennzeichnet, dass** der Sensorblock (10) zur Positionsdatenerfassung einen Positionssensor (13) zur Erfassung einer momentanen Ist-Position aufweist.

3. Navigationsgerät nach einem der Ansprüche 1 oder 2,
**dadurch gekennzeichnet, dass** der Sensorblock (10) zur Positionsdatenerfassung einen Richtungssensor (12) zur Erfassung einer momentanen Orientierung des Fahrzeugs und/oder einen Geschwindigkeitssensor (11) und/oder einen Drehratensensor (14) aufweist.

4. Navigationsgerät nach Anspruch 1,
**dadurch gekennzeichnet, dass** die Datenaufbereitungseinheit (30) eine Kontrolleinheit (39) zur vorausschauenden Anforderung von Karteninformationen aufweist.

5. Navigationsgerät nach einem der vorangegangenen Ansprüche,
**dadurch gekennzeichnet, dass** der Kommunikationsblock (20) eine Bedieneinheit (21) zur Eingabe einer Benutzeranforderung (B) zur Änderung der aktuellen Bildinformation aufweist.

6. Navigationsgerät nach einem der vorangegangenen Ansprüche,
**dadurch gekennzeichnet, dass** der Kommunikationsblock (20) einen Verkehrsdatenempfänger (22) zum Empfangen aktueller Verkehrsinformationen aufweist.

7. Navigationsgerät nach einem der vorangegangenen Ansprüche,
**dadurch gekennzeichnet, dass** die Datenaufbereitungseinheit (30) eine Kontrolleinheit (39) zur Verwaltung und Verarbeitung der in dem Kartenspeicher (38) gespeicherten Straßenkarten aufweist.

8. Navigationsgerät nach Anspruch 7,
**dadurch gekennzeichnet, dass** die Kontrolleinheit (39) zur Verwaltung und Verarbeitung der in dem Kartenspeicher (38) gespeicherten Straßenkarten durch die Benutzeranforderung (B) und/oder die Systemanforderung (S) ansteuerbar ist.

9. Navigationsgerät nach einem der vorangegangenen Ansprüche,
**dadurch gekennzeichnet, dass** der Datenbus (3) ein MOST-Bus oder ein MML-Bus ist.

10. Navigationsgerät nach einem der vorangegangenen Ansprüche,
**dadurch gekennzeichnet, dass** der Navigationsrechner (1) und die Datenaufbereitungseinheit (30) mit zwei separaten µ Prozessoren realisiert sind.

11. Navigationsgerät nach einem der vorangegangenen Ansprüche,
**dadurch gekennzeichnet, dass** zwei oder mehrere unabhängige Datenaufbereitungseinheiten (30, 30a, 30b) und Bildschirme (4, 4a, 4b) voneinander unabhängige Kartenausschnitte darstellen.

## Claims

1. A navigation system, particularly for vehicles, including
(a) a data bus (3),
(b) a data store (2), on which a plurality of road map information and navigation data are stored,
(c) a navigation computer (1), connected to the data bus (3), for route planning, associated with which is a sensor block (10) for determining positional data,
(d) a data processing unit (30), connected to the data bus (3), for processing data into image information, wherein the data processing unit (30) includes an image store (32) for storing image information and wherein the data processing unit (30) has a map store (38) for storing road map information,
(e) a display screen (4), connected to the data processing unit (30), on which the image information may be displayed,
(f) a communication block (20) with an operating unit (21) for inputting the start, intermediate destination and/or destination of a journey,
**characterised in that** the positional data determined by the sensor block (10) are supplied via a requirement line (6) to the data processing device (30) and produce a system requirement in the data processing device (30), which results in a change of the current image information.

2. A navigation system as claimed in Claim 1, **characterised in that** the sensor block (10) for the determination of positional data includes a position sensor (13) for determining an instantaneous actual position.

3. A navigation system as claimed in one of Claims 1 or 2, **characterised in that** the sensor block (10) for the determination of positional data includes a direction sensor (12) for determining an instantaneous orientation of the vehicle and/or a rate of rotation sensor (14).

4. A navigation system as claimed in Claim 1, **characterised in that** the data processing device (30) includes a control unit (39) for the forward looking requesting of map information.

5. A navigation system as claimed in one of the preceding claims, **characterised in that** the communication block (20) includes an operating unit (21) for inputting a user requirement (B) for changing the current image information.

6. A navigation system as claimed in one of the preceding claims, **characterised in that** the communication block (20) includes a traffic data receiver (22) for receiving current traffic information.

7. A navigation system as claimed in one of the preceding claims, **characterised in that** the data processing device (30) includes a control unit (39) for managing and processing maps stored in the map store (38).

8. A navigation system as claimed in Claim 7, **characterised in that** the control unit (39) for managing and processing the road maps stored in the map memory (38) is controllable by the user requirement (B) and/or the system requirement (S).

9. A navigation system as claimed in one of the preceding claims, **characterised in that** the data bus (3) is a MOST bus or an MML bus.

10. A navigation system as claimed in one of the preceding claims, **characterised in that** the navigation computer (1) and the data processing unit (30) are implemented with two separate µ processors.

11. A navigation system as claimed in one of the preceding claims, **characterised in that** two or more independent data processing units (30, 30a, 30b) and display screens (4, 4a, 4b) display map sections independent of one another.

## Revendications

1. Système de navigation, en particulier pour des véhicules, comprenant
(a) un bus de données (3),
(b) un support de stockage des données (2) sur lequel sont stockées une multitude d'informations de cartes routières et de données de navigation,
(c) un calculateur de navigation (1) relié au bus de données (3) pour la planification des itinéraires, un module de détection (10) étant associé à une détection des données de position,
(d) une unité de traitement des données (30) reliée au bus de données (3) et destinée au traitement des données en informations graphiques, l'unité de traitement des données (30) contenant un support de stockage graphique (32) destiné à stocker les informations graphiques, et l'unité de traitement des données (30) comportant un support de stockage de cartes (38) destiné à stocker des informations de cartes routières,
(e) un écran (4) relié à l'unité de traitement des données (30), sur lequel on peut afficher des informations graphiques,
(f) un module de communication (20) muni d'une unité de commande (21) destinée à l'entrée du départ, des étapes intermédiaires et/ ou du but final d'un voyage,
**caractérisé en ce que** les données de position détectées par le module de détection (10) transmettent à l'unité de traitement des données (30) une requête système (S) par le biais d'une ligne de requête (6), laquelle conduit à la modification d'une information graphique actuelle.

2. Système de navigation selon la revendication 1, **caractérisé en ce que** le module de détection (10) destiné à la détection des données de position présente un détecteur de position (13) pour la détection d'une position réelle momentanée.

3. Système de navigation selon la revendication 1 ou 2, **caractérisé en ce que** le module de détection (10) destiné à la détection des données de position présente un détecteur de direction (12) pour la détection d'une orientation momentanée du véhicule et/ou un détecteur de vitesse (11) et/ou un détecteur de vitesses de rotation du moteur (14).

4. Système de navigation selon la revendication 1, **caractérisé en ce que** l'unité de traitement des données (30) présente une unité de contrôle (39) destinée à la requête d'informations cartographiques à l'avance.

5. Système de navigation selon l'une des revendications précédentes, **caractérisé en ce que** le module de communication (20) présente une unité de commande (21) pour l'entrée d'une requête utilisateur (B) dans le but de modifier l'information graphique actuelle.

6. Système de navigation selon l'une des revendications précédentes, **caractérisé en ce que** le module de communication (20) présente un récepteur de données de trafic (22) pour la réception d'informations de trafic actuelles.

7. Système de navigation selon l'une des revendications précédentes, **caractérisé en ce que** l'unité de traitement des données (30) présente une unité de contrôle (39) destinée à la gestion et à la transformation des cartes routières stockées dans le support de stockage des cartes (38).

8. Système de navigation selon la revendication 7, **caractérisé en ce que** l'unité de contrôle (39) destinée à la gestion et à la transformation des cartes routières stockées dans le support de stockage des cartes (38) peut être commandée grâce à la requête utilisateur (B) et/ou à la requête système (S).

9. Système de navigation selon l'une des revendications précédentes, **caractérisé en ce que** le bus de données (3) est un bus MOST ou un bus MML.

10. Système de navigation selon l'une des revendications précédentes, **caractérisé en ce que** le calculateur de navigation (1) et l'unité de traitement des données (30) sont réalisées avec deux processeurs µ séparés.

11. Système de navigation selon l'une des revendications précédentes, **caractérisé en ce que** deux ou plusieurs unités de traitement des données (30, 30a, 30b) et écrans (4, 4a, 4b) indépendants représentent des sections de cartes indépendantes.
